(19) Europäisches Patentamt
European Patent Office
Office européen des brevets

(11) Veröffentlichungsnummer: **0 354 174 A1**

(12) **EUROPÄISCHE PATENTANMELDUNG**

(21) Anmeldenummer: **89810486.4**

(22) Anmeldetag: **22.06.89**

(51) Int. Cl.[5]: **C 09 K 15/30**
D 06 P 1/642, D 06 P 3/52,
D 06 M 13/322, D 06 M 13/256

(30) Priorität: **01.07.88 CH 2517/88**

(43) Veröffentlichungstag der Anmeldung:
**07.02.90 Patentblatt 90/06**

(84) Benannte Vertragsstaaten: **CH DE FR GB LI**

(71) Anmelder: **CIBA-GEIGY AG**
**Klybeckstrasse 141**
**CH-4002 Basel (CH)**

(72) Erfinder: **Zelger, Josef**
**Paradiesstrasse 1**
**CH-4125 Riehen (CH)**

**Neukom, Alfred Jonathan**
**Höldeliweg 27**
**CH-4460 Gelterkinden (CH)**

(54) **Stabile, wässrige Zusammensetzung zur Verbesserung der Lichtechtheit.**

(57) Stabile, wässrige Zusammensetzungen von Benzotriazolverbindungen enthaltend

(a) 20-40 Gew.% eines 2-(2′-Hydroxyphenyl)-benzotriazol der Formel

(1) 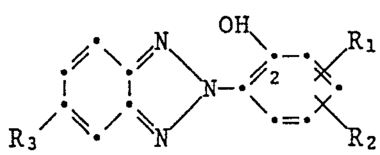

worin $R_1$ H, $C_1$-$C_4$-Alkyl oder $C_1$-$C_4$-Alkoxy,
$R_2$ H, $C_1$-$C_4$-Alkyl, $C_1$-$C_4$-Alkoxy oder Sulfo und
$R_3$ H oder Halogen bedeuten, und

(b) 0,5-11 Gew.% eines Kondensationsproduktes aus einer nicht etherverbrückten aromatischen Sulfonsäure und Formaldehyd, und

(c) 0,2-20 Gew.% eines nichtionischen Dispergatoren.

Diese Zusammensetzungen sind ausgezeichnete Mittel zur Verbesserung der Lichtechtheit von Färbungen auf synthetischen Fasermaterialien, insbesondere Polyester- oder säuremodifizierten Polyesterfasermaterialien.

**EP 0 354 174 A1**

## Beschreibung

### Stabile, wässrige Zusammensetzung zur Verbesserung der Lichtechtheit

Die vorliegende Erfindung betrifft eine stabile wässrige Zusammensetzung sowie deren Verwendung zur Verbesserung der Lichtechtheit von gefärbtem und ungefärbtem Polyesterfasermaterial und von Mischgeweben, die solche Fasern enthalten.

Aus der japanischen Auslegeschrift Sho 62-19552 ist eine Dispersion zur Verbesserung der Lichtechtheit von synthetischen Materialien bekannt, die ein Benzotriazolderivat und 20-200 Gew.% bezogen auf das Benzotriazolderivat, eines Kondensationsproduktes aus einer aromatischen Sulfonsäure und Formaldehyd enthält. Aus dieser Auslegeschrift ist auch bekannt, dass Dispersionen mit weniger als 20 Gew.% des Kondensationsproduktes unstabil sind.

Es wurde nun überraschenderweise eine stabile wässrige Zusammensetzung von Benzotriazolverbindungen gefunden mit weniger als 20 Gew.% des Kondensationsproduktes aus einer aromatischen Sulfonsäure und Formaldehyd.

Gegenstand der Erfindung ist somit eine stabile, wässrige Zusammensetzung von Benzotriazolverbindungen, welche dadurch gekennzeichnet ist, dass sie

(a) 15-60 Gew.% eines 2-(2′-Hydroxyphenyl)-benzotriazol der Formel

(1) 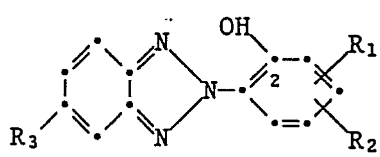

worin

$R_1$ H, $C_1$-$C_4$-Alkyl oder $C_1$-$C_4$-Alkoxy,

$R_2$ H, $C_1$-$C_4$-Alkyl, $C_1$-$C_4$-Alkoxy oder Sulfo und

$R_3$ H oder Halogen bedeuten,

(b) 0,5-11 Gew.% eines Kondensationsproduktes aus einer nicht etherverbrückten aromatischen Sulfonsäure und Formaldehyd, und

(c) 0,5 bis 20 Gew.% eines nichtionogenen Dispergators

enthält.

Als $C_1$-$C_4$-Alkyl bzw. $C_1$-$C_4$-Alkoxy kommen in Betracht Methyl, Ethyl, n-Propyl, Isopropyl, n-Butyl, Isobutyl, sek.Butyl oder tert.Butyl bzw. Methoxy, Ethoxy, n-Propoxy, iso-Propoxy, n-Butoxy, Isobutoxy, sek.Butoxy oder tert.Butoxy.

Halogen bedeutet beispielsweise Fluor, Brom oder vorzugsweise Chlor.

Benzotriazolderivate der Formel (1), worin $R_1$ 3-tert.Butyl, $R_2$ 5-Methyl und $R_3$ H oder worin $R_1$ 3-tert.Butyl, $R_2$ 5-Methyl und $R_3$ Chlor bedeuten sind besonders bevorzugt. Benzotriazolderivate der Formel (1) können auch gemischt eingesetzt werden.

Die Benzotriazolderivate der Formel (1) sind bekannt, z.B. aus der weiter oben genannten japanischen Auslegeschrift und aus der US-A-4 127 586 und können nach den in der US-A-4 127 586 beschriebenen Verfahren hergestellt werden.

Als Komponente (b) kommen in Betracht z.B. das Kondensationsprodukt aus Naphthalinsulfonsäure und Formaldehyd, das Kondensationsprodukt aus Phenolsulfonsäure und Formaldehyd, das Kondensationsprodukt aus Kresolsulfonsäure und Formaldehyd, das Kondensationsprodukt aus Biphenolsulfonsäure und Formaldehyd und ein wasserdispergierbares oder wasserlösliches Kondensationsprodukt erhalten durch Cokondensation von Phenol und Naphthalinsulfonsäure mit Formaldehyd. Vorzugsweise wird als Komponente (b) das Kondensationsprodukt aus Naphthalinsulfonsäure und Formaldehyd eingesetzt.

Das nichtionogene Tensid (c) ist vorteilhafterweise ein nichtionogenes Alkylenoxydanlagerungsprodukt von 1 bis 300 Mol Alkylenoxyd, z.B. Ethylenoxyd und/oder Propylenoxyd, an 1 Mol eines aliphatischen Monoalkohols mit mindestens 4 Kohlenstoffatomen, eines 3- bis 6-wertigen aliphatischen Alkohols, eines gegebenenfalls durch Alkyl, Phenyl, α-Tolylethyl, Benzyl, α-Methylbenzyl oder α,α-Dimethylbenzyl substituierten Phenols oder einer Fettsäure mit 8 bis 22 Kohlenstoffatomen.

Als nichtionogene Tenside seien beispielsweise genannt:

- Fettalkohole mit 8 bis 22 Kohlenstoffatomen, vor allem Cetylalkohol;
- Anlagerungsprodukte von vorzugsweise 2 bis 80 Mol Alkylenoxyd, insbesondere Ethylenoxyd, wobei einzelne Ethylenoxydeinheiten durch substituierte Epoxyde, wie Styroloxyd und/oder Propylenoxyd, ersetzt sein können, an höhere ungesättigte oder gesättigte Monoalkohole, Fettsäuren, Fettamine oder Fettamide mit 8 bis 22 Kohlenstoffatomen oder an Benzylalkohole, Phenylphenole, Benzylphenole, β-Phenethylphenole, α-Methylbenzylphenole, α,α-Dimethylbenzylphenole, α-Tolylethylphenole oder Alkylphenole, deren Alkylreste mindestens 4 Kohlenstoffatome aufweisen;
- Alkylenoxyd-, insbesondere Ethylenoxyd- und/oder Propylenoxyd-Kondensationsprodukte (Blockpolymerisate);
- Ethylenoxyd-Propylenoxyd-Addukte an Diamine, vor allem Ethylendiamin;
- Umsetzungsprodukte aus einer 8 bis 22 Kohlenstoffatome aufweisenden Fettsäure und einem primären oder sekundären, mindestens eine Hydroxyniederalkyl- oder Niederalkoxyniederalkylgruppe aufweisenden Amin oder Alkylenoxyd-Anlagerungsprodukte dieser hydroxyalkylgruppenhaltigen Umsetzungsprodukte, wobei die Umsetzung so erfolgt, dass das molekulare Mengenverhältnis zwischen Hydroxyalkylamin und Fettsäure 1:1 und grösser als 1, z.B. 1:1 bis 2:1 sein kann, und
- Sorbitanester vorzugsweise mit langkettigen Estergruppen oder ethoxylierte Sorbitanester, wie z.B. Polyoxethylen-Sorbitanmonolaurat mit 4 bis 10 Ethylenoxideinheiten oder Polyoxethylen-Sorbitantrioleat mit 4 bis 20 Ethylenoxideinheiten.
- Anlagerungsprodukte von Propylenoxyd an einen drei- bis sechswertigen aliphatischen Alkohol von 3

bis 6 Kohlenstoffatomen, z.B. Glycerin oder Pentaerythrit, wobei die Polypropylenoxyaddukte ein durchschnittliches Molekulargewicht von 250 bis 1800, vorzugsweise 400 bis 900, aufweisen;

- Fettalkoholpolyglykolmischether, insbesondere Anlagerungsprodukte von 3 bis 30 Mol Ethylenoxid und 3 bis 30 Mol Propylenoxid an aliphatische Monoalkohole von 8 bis 22 Kohlenstoffatomen, vorzugsweise Alkanole von 8 bis 16 Kohlenstoffatomen.

Davon sind obengenannte Ethylenoxyd- und/oder Propylenoxyd-Kondensationsprodukte als nichtionische Tenside besonders bevorzugt.

Die erfindungsgemässen Zubereitungen dienen zur Verbesserung der Lichtechtheit von gefärbten und ungefärbten synthetischen Fasermaterialien. Die Applikation auf den Fasermaterialien kann nach einem Ausziehverfahren erfolgen. Sie kann aber auch kontinuierlich mittels Niedrigauftragssystem oder Heissapplikationssystem erfolgen.

Das Flottenverhältnis kann innerhalb eines weiten Bereiches gewählt werden, z.B. 1:3 bis 1:100, vorzugsweise 1:7 bis 1:50. Die Temperatur beträgt mindestens 70° C und in der Regel ist sie nicht höher als 140° C.

Die Einsatzmengen in denen die erfindungsgemässe Zubereitung den Bädern zugesetzt wird, bewegt sich von 0,5 bis 10 % des Warengewichtes.

Als Fasermaterial, insbesondere Textilmaterial, das mit der erfindungsgemässen Zubereitung behandelt werden kann, kommen sauer modifizierte Polyesterfasern und besonders lineare Polyesterfasern in Betracht. Die linearen Polyesterfasern werden mit Dispersionsfarbstoffen und die sauer modifizierten Polyesterfasern mit kationischen Farbstoffen gefärbt.

Unter linearen Polyesterfasern sind dabei Synthesefasern zu verstehen, die z.B. durch Kondensation von Terephthalsäure mit Ethylenglykol oder von Isophthalsäure oder Terephthalsäure mit 1,4-Bis-(hydroxymethyl)cyclohexan erhalten werden, sowie Mischpolymere aus Terephthal- und Isophthalsäure und Ethylenglykol. Der in der Textilindustrie bisher fast ausschliesslich eingesetzte lineare Polyester besteht aus Terephthalsäure und Ethylenglykol. Sauer modifizierte Polyesterfasern sind beispielsweise Polykondensationsprodukte von Terephthalsäure oder Isophthalsäure, Ethylenglykol und 1,2-bzw. 1,3-Dihydroxy-3-(3-natriumsulfopropoxy)propan, 2,3-Dimethylol-1-(natriumsulfopropoxy)-butan, 2,2-Bis-(3-natriumsulfopropoxyphenyl)-propan oder 3,5-Dicarboxy-benzolsulfonsäure bzw. sulfonierter Terephthalsäure, sulfonierter 4-Methoxybenzolcarbonsäure oder sulfonierter Diphenyl-4,4′-dicarbonsäure.

Die Fasermaterialien können auch als Mischgewebe mit anderen Fasern, z.B. Mischungen aus Polyacrylnitril/Polyester, Polyamid/Polyester, Polyester/Baumwolle, Polyester/Viskose und Polyester/Wolle, verwendet werden.

Das zu färbende Textilmaterial kann sich in verschiedenen Verarbeitungsstadien befinden. Beispielsweise kommen in Betracht: loses Material, Stückware, wie Gewirke oder Gewebe, Garn in Wickel- oder Muff-Form. Letztere können Wickeldichten von 200 bis 600 g/dm$^3$, insbesondere 400 bis 450 g/dm$^3$, aufweisen.

Die Applikation erfindungsgemässer Zusammensetzungen kann vor, während oder nach dem Färben erfolgen.

Die Färbebäder können auch übliche Zusätze, zweckmässig Elektrolyte wie Salze, z.B. Natriumsulfat, Ammoniumsulfat, Natrium- oder Ammoniumphosphate oder -polyphosphate, Metallchloride oder -nitrate wie Calcium chlorid, Magnesiumchlorid bzw. Calciumnitrate, Ammoniumacetat oder Natriumacetat und/oder Säuren, z.B. Mineralsäuren, wie Schwefelsäure oder Phosphorsäure, oder organische Säuren, zweckmässig niedere aliphatische Carbonsäuren, wie Ameisen-, Essig- oder Oxalsäure enthalten. Die Säuren dienen vor allem der Einstellung des pH-Wertes der erfindungsgemäss verwendeten Flotten, der in der Regel 4 bis 6,5, vorzugsweise 4,5 bis 6, beträgt.

Lineare Polyesterfasern färbt man vorzugsweise nach dem sogenannten Hochtemperaturverfahren in geschlossenen und zweckmässigerweise auch druckbeständigen Apparaturen bei Temperaturen von über 100° C, bevorzugt zwischen 110 und 135° C, und gegebenenfalls unter Druck. Als geschlossene Gefässe eignen sich beispielsweise Zirkulationsapparaturen wie Kreuzspul- oder Baumfärbeapparate, Haspelkufen, Düsen-oder Trommelfärbemaschinen, Muff-Färbeapparate, Paddeln oder Jigger.

Vorzugsweise lässt man das Färbegut während 5 Minuten bei 60-80° C im Bad, das den Farbstoff, das Hilfsmittelgemisch und gegebenenfalls weitere Zusätze enthält und auf einen pH-Wert von 4,5 bis 5,5 eingestellt ist, vorlaufen, steigert die Temperatur innerhalb von 15 bis 35 Minuten auf 110 bis 135° C, vorzugsweise 125-130° C und belässt die Färbeflotte 15 bis 90 Minuten, vorzugsweise 30 bis 60 Minuten, bei dieser Temperatur.

Die Fertigstellung der Färbungen erfolgt durch Abkühlen der Färbeflotte auf 60 bis 80° C, Spülen der Färbungen mit Wasser und gegebenenfalls durch Reinigung auf übliche Weise im alkalischen Medium unter reduktiven Bedingungen. Die Färbungen werden dann wiederum gespült und getrocknet. Man erhält auf synthetischem Fasermaterial, insbesondere auf linearen Polyesterfasern, Ausfärbungen, die sich durch gute Lichtechtheit auszeichnen.

Ausser den Komponenten (a), (b) und (c) enthält die erfindungsgemässe Dispersion zweckmässig zusätzlich als Komponente (d) ein Thixotropie-und/oder Verdickungsmittel. Ein solcher Zusatz dient dazu, die Viskosität der Dispersion einzustellen.

Als Komponente (d) eignen sich insbesondere Carboxylgruppen enthaltende Polymerisate. Diese werden in Form von 0,5 bis 10 %igen, vorzugsweise 0,5 bis 5 %igen wässrigen Lösungen oder Dispersionen, bezogen auf die Lösung oder Dispersion eingesetzt.

Diese Polymerisate stellen vorteilhafterweise polymerisierte ethylenisch ungesättigte Mono- oder Dicarbonsäuren von 3 bis 5 Kohlenstoffatomen, wie z.B. Polyacrylsäure oder Polymerisate von Methacrylsäure, Crotonsäure, Itaconsäure, Teraconsäure, Maleinsäure bzw. deren Anhydrid, Fumarsäure,

Citraconsäure oder Mesaconsäure, Copolymerisate aus Olefinen, z.B. Ethylen oder Propylen, Diketene, Acrylsäureestern, Methacrylsäureestern oder Acrylamiden und den vorgenannten Monomeren einschliesslich der Acrylsäure oder Copolymerisate der Acrylsäure mit Methacrylsäure, Methacrylnitril oder Vinylmonomeren, wie z.B. Vinylphosphorsäure, Copolymerisate aus Maleinsäure und Styrol, Maleinsäure und einem Vinylether oder Maleinsäure und einem Vinylester z.B. Vinylacetat dar.

Die Verdickungsmittel bildenden carboxylgruppenhaltigen Polymerisate können ein Molekulargewicht von $3 \cdot 10^2$ bis $6 \cdot 10^6$ haben.

Als besonders brauchbare Komponenten (d) haben sich Lösungen von Polyacrylsäure oder auch Copolymerisate aus Acrylsäure und Acrylamid gezeigt, wobei das entsprechende Molekulargewicht von 0,5 bis 6 Millionen schwanken kann. Die Copolymerisate weisen vorteilhafterweise ein Molverhältnis Acrylsäure:Acrylamid von 1:0,8 bis 1:1,2 auf. Als Komponente (d) kann ebenfalls ein teilweise hydrolysiertes Polymaleinsäureanhydrid verwendet werden. Dieses liegt in der Regel teilweise in Form eines wasserlöslichen Salzes vor und besitzt ein Molgewicht, das vorzugsweise zwischen 300 und 5000 liegt.

Weitere als Komponente (d) brauchbare Verdikkungsmittel sind Polysaccharide, wie z.B. Carboxymethylcellulose, Methylcellulose, Methylhydroxyethylcellulose, Johannisbrotkernmehlether oder Stärkeether sowie Alginate, Polyethylenglykole, Polyvinylpyrrolidone, Polyvinylalkohole oder auch feinverteilte Kieselsäure vorzugsweise mit spezifischer Oberfläche von 50 bis 380 $m^2/g$ und Schichtsilikate wie z.B. Bentonite, Bentone, Surektite, Montmorillonite. Gut geeignet sind auch anionische Heteropolysaccharide, die aus den Monosacchariden Glukose und Mannose und Glucuronsäure gebildet sind.

Die Mengen dieser als Komponente (d) bezeichneten Zusatzbestandteile liegen im allgemeinen von 0 bis 6 Gewichtsprozent, vorzugsweise 0,2 bis 4 Gewichtsprozent, bezogen auf die gesamte wässrige Dispersion vor.

Neben den Komponenten (a), (b) und (c) oder (a), (b), (c) und (d) kann die erfindungsgemässe Dispersion eine weitere von der Komponente (b) verschiedene anionische Verbindung enthalten. Ebenso kann die erfindungsgemässe wässrige Dispersion noch zusätzlich Antischaummittel, Konservierungsmittel oder Gefrierschutzmittel enthalten.

Als zusätzliche von der Komponente (b) verschiedene anionische Verbindungen kommen beispielsweise

- sulfatierte ungesättigte Fettsäuren oder Fettsäureniederalkylester, die im Fettrest 8 bis 20 Kohlenstoffatome aufweisen, z.B. Rizinolsäure und solche Fettsäuren enthaltende Oele, z.B. Rizinusöl;
- Alkylarylsulfonate mit einer oder zwei geradkettigen oder verzweigten Alkylketten mit insgesamt mindestens 6 Kohlenstoffatomen, z.B. Dodecylbenzolsulfonate, Dibutylnaphthalinsulfonate oder 3,7-Diisobutylnaphthalinsulfonate;
- sulfonierte 1-Benzyl-2-alkylbenzimidazole mit 8 bis 22 Kohlenstoffatomen im Alkylrest;
- Sulfonate von Polycarbonsäureestern, z.B. Dihexylsulfosuccinate, Di-2-ethylhexylsulfosuccinate, Dioctylsulfosuccinate oder Sulfosuccinamide;
- die mit einer organischen Dicarbonsäure, wie z.B. Maleinsäure, Malonsäure oder Sulfobernsteinsäure, vorzugsweise jedoch mit einer anorganischen mehrbasischen Säure, wie z.B. o-Phosphorsäure oder insbesondere Schwefelsäure in einen sauren Ester übergeführten Anlagerungsprodukte von 1 bis 60, vorzugsweise 2 bis 30 Mol, Ethylenoxid und/oder Propylenoxid an Fettamine, Fettamide, Fettsäuren oder Fettalkohole je mit 8 bis 22 Kohlenstoffatomen oder an drei- bis sechswertige Alkanole mit 3 bis 6 Kohlenstoffatomen;
- Ligninsulfonate, Kondensationsprodukte von Ditolylethersulfonaten und Formaldehyd, Kondensationsprodukte von Naphthalinsulfonsäure und Naphthol- oder Naphthylaminsulfonsäuren mit Formaldehyd, Kondensationsprodukte von Phenolsulfonsäuren und/oder sulfoniertem Dihydroxydiphenylsulfon und Phenolen bzw. Kresolen mit Formaldehyd und/oder Harnstoff in Betracht.

Der Säurerest dieser anionischen Verbindungen liegt in der Regel in Salzform, d.h. als Alkalimetall-, Ammonium- oder Aminsalz vor. Beispiele für solche Salze sind Lithium-, Natrium-, Kalium-, Ammonium-, Trimethylamin-, Aethanolamin-, Diethanolamin- oder Triethanolaminsalze.

Als Antischaummittel können die erfindungsgemässen Zusammensetzungen Silikonöle sowie auch Entschäumer auf der Basis von Tributylphosphat, Dialkyldiamide oder 2-Ethylhexanol enthalten.

Als Konservierungsmittel, die in den erfindungsgemässen Zusammensetzungen enthalten sein können, können die verschiedensten handelsüblichen Produkte, wie wässrige Lösungen von Formaldehyd, 6-Acetoxy-2,4-dimethyldioxan, 1,2-Benzisothiazolin-3-on und besonders 2-Chloracetamid in Betracht kommen.

Als Gefrierschutzmittel, die den erfindungsgemässen Zusammensetzungen zur Erhaltung der Fliessfähigkeit bei tiefen Temperaturen und zur Verhinderung des Ausfrierens von Wasser zugesetzt werden können, seien Glykole oder Polyole, wie z.B. Ethylenglykol, Propylenglykol bzw. Glyzerin sowie Polyethylenglykole, wie z.B. Di-, Tri- oder Tetraethylenglykol oder Sorbitlösung genannt. Ein bevorzugtes Antifrostmittel ist Propylenglykol.

Die erfindungsgemässen Zusammensetzungen enthalten mit Vorteil, jeweils bezogen auf die Zusammensetzung

15-60 Gew.% der Komponente (a)
0,5-11 Gew.% der Komponente (b)
0,5-20 Gew.% der Komponente (c)
0- 6 Gew.% der Komponente (d),
0- 3 Gew.% Antischaummittel,
0-0,5 Gew.% Konservierungsmittel,
0-30 Gew.% Gefrierschutzmittel und
auf 100 Gew.% Wasser
und vorzugsweise
25-40 Gew.% der Komponente (a)
2-6 Gew.% der Komponente (b)
0,5- 4 Gew.% der Komponente (c)
0,2- 4 Gew.% der Komponente (d),
0,05-1 Gew.% Antischaummittel,
0-0,5 Gew.% Konservierungsmittel,

5-10 Gew.% Gefrierschutzmittel und
auf 100 Gew.% Wasser.

Die Herstellung der erfindungsgemässen Zubereitung erfolgt zweckmässigerweise indem man die Komponenten (b) und (c) und allfällig erwünschte Zusätze wie weitere anionische Dispergiermittel mit Wasser vermischt und während 30 bis 60 Minuten bis zur Homogenität rührt. Zu dieser Lösung wird dann die Komponente (a) portionenweise eingegeben und 60 bis 90 Minuten gerührt. Der entstandenen dickflüssigen Masse wird Wasser und gegebenenfalls Antischaummittel zugegeben. Die erhaltene Mischung wird dann vorteilhafterweise durch Einwirkung von hohen Scherkräften, z.B. durch Mahlen in einer Kugel-, Sand- oder Perlmühle auf eine Korngrösse von < 5, vorzugsweise 0,5 bis 2,0 µm, zerkleinert. Nach dem Mahlen wird noch ein Konservierungsmittel zugesetzt und mit Wasser unter Rühren auf die gewünschte Konzentration verdünnt.

Die erfindungsgemässen Zusammensetzungen zeichnen sich durch eine gute Lagerstabilität aus.

In den folgenden Beispielen sind die Teile Gewichtsteile und die Prozente Gewichtsprozente.

Herstellungsbeispiele

Beispiel 1:

In einem Mischer werden 250 Teile des Kondensationsproduktes aus Naphthalinsulfonsäure und Formaldehyd,
10 Teile Montmorrillonit,
100 Teile eines nichtionogenen Dispergators,
250 Teile 1,2-Propylenglykol und
1490 Teile Wasser
homogen gemischt. In die erhaltene klare, bräunliche Lösung werden unter Rühren
1650 Teile 2-(2′-Hydroxy-3′-tert.butyl-5′-methylphenyl)-5-chlorobenzotriazol
portionenweise eingegeben, wobei die Viskosität zunimmt. Die pastöse Masse wird nun bis zur Homogenität weitergerührt und mit
371 Teilen Wasser
verdünnt, mit
4 Teilen eines Entschäumers
versetzt und weitergerührt. Die erhaltene Aufschlämmung wird nun in eine Perlmühle gegeben und solange gemahlen, bis eine Partikelgrösse <5 µm erreicht ist.
4125 Teile des Mahlgutes werden unter Rühren mit
25 Teilen eines Konservierungsmittels und
850 Teilen Wasser
homogenisiert. Man erhält eine lagerstabile Dispersion.

Beispiel 2:

Man verfährt wie in Beispiel 1 beschrieben, verwendet jedoch 5 Teile gereinigtes, hochmolekulares Na-Ligninsulfonat, 0,3 Teile Montmorrillonit, 2 Teile eines Blockpolymers aus Ethylen- und Propylenoxid mit einem Molekulargewicht von ca. 10'000, 5 Teile 1,2-Propylenglykol, 3,3 Teile 2-(2′-Hydroxy-3′-tert.butyl-5′-methylphenyl)-5-chloro-benzotriazol, 0,5 Teile Formaldehyd und 54,2 Teile Wasser. Man erhält ebenfalls eine lagerstabile Dispersion.

Beispiel 3:

Man verfährt wie in Beispiel 1 beschrieben, verwendet jedoch 4 Teile des Kondensationsproduktes aus Naphthalinsulfonsäure und Formaldehyd, 1 Teil eines Anlagerungsproduktes von Ethylenoxid und Propylenoxid mit einem Molekulargewicht von ca. 14'000, 32 Teile 2-(2′-Hydroxy-3′tert.butyl-5′-methylphenyl)-5-chloro-benzotriazol, 1 Teil 2-[2′-Hydroxy-3′,5′-bis-(tert.butyl)-phenyl]-5-chloro-benzotriazol, 0,3 Teile Montmorrillonit, 0,1 Teile Chloracetamid und 61,6 Teile Wasser. Man erhält eine lagerstabile Dispersion.

Beispiel 4:

Verfährt man wie in Beispiel 3 beschrieben, verwendet jedoch anstelle von 1 Teil 2-[2′-Hydroxy-3′,5′-bis-(tert.butyl)-phenyl]-5-chloro-benzotriazol 1 Teil gereinigtes, hochmolekulares Na-Ligninsulfonat, so erhält man eine ebenfalls lagerstabile Dispersion.

Beispiel 5:

Man verfährt wie in Beispiel 1 beschrieben, verwendet jedoch 4 Teile des Kondensationsproduktes aus Naphthalinsulfonsäure und Formaldehyd, 2 Teile gereinigtes, hochmolekulares Na-Ligninsulfonat, 1 Teil eines Anlagerungsproduktes von 8 Mol Ethylenoxid an 1 Mol Distyrylphenol, 1 Teil eines Blockpolymers aus Ethylen- und Propylenoxid mit einem Molekulargewicht von ca. 10'000, 0,3 Teile Montmorrillonit, 0,1 Teile Chloracetamid, 0,08 Teile eines Entschäumers und 58,52 Teile Wasser. Man erhält eine ebenfalls stabile Dispersion.

Anwendungsbeispiel

Beispiel A:

100 g eines Polyestergewirkes (Polyethylenglykolterephthalat) werden in einem HT-Zirkulationsapparat bei 60°C in 3 Liter Wasser eingebracht, welches
3 g Ammoniumsulfat
6 g Dinatriumsalz von Di-(6-sulphonaphtyl-2-)methan
5 g eines fein dispergierten Farbstoffes der Formel

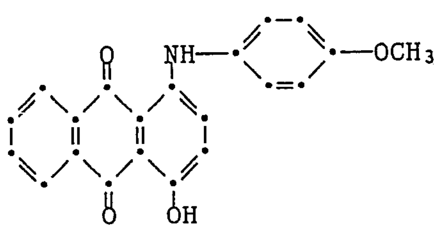

3 g der gemäss Beispiel 1 hergestellten Hilfsmittelformulierung
enthält und mit 85 %iger Ameisensäure auf pH 5 eingestellt ist. Man erhitzt das Färbebad, bei ständig zirkulierender Flotte, innerhalb von 30 Minuten auf 130°C und färbt 1 Stunde bei dieser Temperatur. Alsdann wird das Färbebad abgekühlt und das Substrat gespült und wie üblich zur Entfernung von nichtfixiertem Farbstoff reduktiv gereinigt. Anschliessend wird das Substrat neutralisiert, nochmals gespült und getrocknet. Die Formulierung gemäss Beispiel 1 verhält sich gleich gut, wie eine Formulierung mit höherem Gehalt an Komponente (b). Man erhält somit eine lichtechte marineblaue Färbung.

**Patentansprüche**

1. Stabile, wässrige Zusammensetzung, dadurch gekennzeichnet, dass sie

(a) 15-60 Gew.% eines 2-(2'-Hydroxyphenyl)-benzotriazol der Formel

(1) 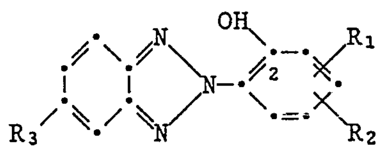

worin

$R_1$ H, $C_1$-$C_4$-Alkyl oder $C_1$-$C_4$-Alkoxy,

$R_2$ H, $C_1$-$C_4$-Alkyl, $C_1$-$C_4$-Alkoxy oder Sulfo und

$R_3$ H oder Halogen bedeuten, und

(b) 0,5-11 Gew.% eines Kondensationsproduktes aus einer nicht etherverbrückten aromatischen Sulfonsäure und Formaldehyd und

(c) 0,5-20 Gew.% eines nichtionisches Dispergators

enthält.

2. Zusammensetzung gemäss Anspruch 1, worin in der Komponente (a) $R_1$ 3-tert.Butyl, $R_2$ 5-Methyl und $R_3$ H bedeuten.

3. Zusammensetzung gemäss Anspruch 1, worin in der Komponente (a) $R_1$ 3-tert.Butyl, $R_2$ 5-Methyl und $R_3$ Chlor bedeuten.

4. Zusammensetzung gemäss einem der Ansprüche 1 bis 3, worin als Komponente (b) ein Kondensationsprodukt aus Naphthalinsulfonsäure und Formaldehyd verwendet wird.

5. Zusammensetzung gemäss Anspruch 1, dadurch gekennzeichnet, dass sie bezogen auf die ganze Zusammensetzung

| | |
|---|---|
| 15-60 Gew.% | der Komponente (a) |
| 0,5-11 Gew.% | der Komponente (b) |
| 0,5-20 Gew.% | der Komponente (c) |
| 0- 6 Gew.% | der Komponente (d), |
| 0- 3 Gew.% | Antischaummittel, |
| 0-0,5 Gew.% | Konservierungsmittel, |
| 0-30 Gew.% | Gefrierschutzmittel und |
| auf 100 Gew.% | Wasser |

enthält.

6. Zusammensetzung gemäss Anspruch 5, dadurch gekennzeichnet, dass sie bezogen auf die ganze Zusammensetzung

| | |
|---|---|
| 25-40 Gew.% | der Komponente (a) |
| 2-6 Gew.% | der Komponente (b) |
| 0,5- 4 Gew.% | der Komponente (c) |
| 0,2- 4 Gew.% | der Komponente (d), |
| 0,05-1 Gew.% | Antischaummittel, |
| 0-0,5 Gew.% | Konservierungsmittel, |
| 5-10 Gew.% | Gefrierschutzmittel und |
| auf 100 Gew.% | Wasser |

enthält.

7. Verwendung einer stabilen, wässrigen Zusammensetzung gemäss Anspruch 1 zur Verbesserung der Lichtechtheit von Färbungen auf Polyesterfasermaterial und Mischgeweben, welche solches Fasermaterial enthalten.

Europäisches Patentamt

# EUROPÄISCHER RECHERCHENBERICHT

Nummer der Anmeldung

EP 89 81 0486

## EINSCHLÄGIGE DOKUMENTE

| Kategorie | Kennzeichnung des Dokuments mit Angabe, soweit erforderlich, der maßgeblichen Teile | Betrifft Anspruch |
| --- | --- | --- |
| X | DE-A-2 453 146 (SANDOZ-PATENT) * Seite 8, Beispiel 1; Seite 5, letzter Formel * | 1,4 |
| Y | GB-A-2 187 746 (SANDOZ) * Ansprüche 1-8; Seite 2, Zeile 24 - Seite 3, Zeile 1 * | 1 |
| A | | 2,3,7 |
| Y | GB-A-2 174 731 (SANDOZ) * Seite 1, Zeilen 26-28,45-48 * | 1 |
| A | | 3,4,7 |
| A | DERWENT FILE SUPPLIER WPI(L), AN 88-047427[07], 1988, Derwent Publications Ltd, London, GB; & JP-A-63 006 182 (MITSUBISHI RAYON K.K.) 12-01-1988 * Zusammenfassung * | 1,7 |
| A | CHEMICAL ABSTRACTS, Band 94, Nr. 13, Juni 1981, Seite 79, Zusammenfassung Nr. 210236y, Columbus, Ohio, US; & JP-A-81 31 084 (TOYOBO CO., LTD) 28-03-1981; & JP-B-62 19 552 (Kat. D) * Zusammenfassung * | 1,3,4,7 |
| A | EP-A-0 245 204 (CIBA-GEIGY) * Seite 24: "Färbeflotte 3" * | 1,4 |

-/-

**KLASSIFIKATION DER ANMELDUNG (Int. Cl.5)**

C 09 K 15/30
D 06 P 1/642
D 06 P 3/52
D 06 M 13/322
D 06 M 13/256

**RECHERCHIERTE SACHGEBIETE (Int. Cl.5)**

C 09 K
D 06 P
D 06 M

Der vorliegende Recherchenbericht wurde für alle Patentansprüche erstellt

| Recherchenort | Abschlußdatum der Recherche | Prüfer |
| --- | --- | --- |
| DEN HAAG | 01-09-1989 | DEKEIREL M.J. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)

Europäisches Patentamt

# EUROPÄISCHER RECHERCHENBERICHT

Nummer der Anmeldung

EP 89 81 0486

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | CHEMICAL ABSTRACTS, Band 100, Nr. 26, Juni 1984, Seite 79. Zusammenfassung Nr. 211576p, Columbus, Ohio, US; & JP-A-59 09 287 (SUMITOMO CHEMICAL CO., LTD) 18-01-1984<br>* Zusammenfassung *<br>----- | 1-4,7 | |
| | | | RECHERCHIERTE SACHGEBIETE (Int. Cl.5) |

Der vorliegende Recherchenbericht wurde für alle Patentansprüche erstellt

| Recherchenort | Abschlußdatum der Recherche | Prüfer |
|---|---|---|
| DEN HAAG | 01-09-1989 | DEKEIREL M.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument